Europäisches Patentamt

European Patent Office

Office européen des brevets

(19)

(11) Publication number: **0 186 497 B1**

# EUROPEAN PATENT SPECIFICATION

(12)

(45) Date of publication of patent specification: **26.02.92**    (51) Int. Cl.5: **C01B 21/068**, C04B 35/58

(21) Application number: **85309420.9**

(22) Date of filing: **23.12.85**

(54) **Process for producing silicon nitride of high alpha content.**

(30) Priority: **28.12.84 JP 276297/84**

(43) Date of publication of application:
**02.07.86 Bulletin 86/27**

(45) Publication of the grant of the patent:
**26.02.92 Bulletin 92/09**

(84) Designated Contracting States:
**DE FR GB**

(56) References cited:
**DE-A- 2 350 031**
**GB-A- 1 414 143**
**GB-A- 1 431 780**
**US-A- 3 937 792**

**CHEMICAL ABSTRACTS, vol. 90, no. 24, June
1979, page 290, no. 191458w, Columbus,
Ohio, US; & CS-A-175 124 (KURTEV, BORIS et
al.) 15-11-1978**

(73) Proprietor: **ONODA CEMENT COMPANY, LTD.
6276, Oaza Onoda
Onoda-shi Yamaguchi-ken(JP)**

(72) Inventor: **Kato, Hajime
21-4 Takahama 6-chome
Chiba City Chiba Prefecture(JP)**
Inventor: **Tsutsumi, Takeshi
1-8-303 Inagedai-cho
Chiba City Chiba Prefecture(JP)**
Inventor: **Nitta, Kouji
567-18 Aza Monomiyama Oaza Higashi
Takadomari
Onoda City Yamaguchi Prefecture(JP)**
Inventor: **Miura, Eiichi
2648 Oaza Kiwanami
Ube City Yamaguchi Prefecture(JP)**

(74) Representative: **Godwin, Edgar James et al
MARKS & CLERK 57-60 Lincoln's Inn Fields
London, WC2A 3LS(GB)**

EP 0 186 497 B1

Rank Xerox (UK) Business Services

**Description**

The present invention relates to a process for producing silicon nitride by nitriding elementary silicon, also referred to below as metallic silicon.

As the starting material for producing a silicon nitride sintered body, a silicon nitride is desirable because elongated grains are formed when there is a transition from the $\alpha$-phase to the $\beta$-phase, thereby resulting in sintered bodies having high density and high strength. Although $\alpha$-silicon nitride is stable in lower temperature regions, the formation of $\beta$-silicon nitride in nitriding silicon has problems in the control of reaction temperature because the nitriding reaction is an exothermic one.

Heretofore, a wide variety of measures have been taken for solving the problems. Such measures include, for example, carrying out the reaction at low temperatures under nitrogen atmosphere for a long period of time, mixing an inert gas such as hydrogen or argon into the nitrogen atmosphere, or mixing foreign material with the elementary silicon starting material. Further, when the temperature of the silicon bed increased widely, remedial measures for controlling the runaway have been adopted, such as reducing the nitriding gas partial pressure in the nitriding furnace by means of a vacuum pump or shutting down the operation of the heat source. All of the above-mentioned measures heretofore employed, however, have difficulties in that the operations are complicated, or that strict limitation is necessary either with respect to the thickness of the bed of starting material or to the flow rate of the reaction gas passing over the surface of the starting material.

Also, the above-mentioned conventional process can produce silicon nitride of high $\alpha$-phase content consistently only with difficulty.

US-A-3 937 792 proposes control of reaction rate by dilution of the nitrogen concentration in the furnace or evacuation of the furnace if the temperature detected at furnace and bed is greatly increased.

In GB-A-1,414,143 the reaction rate is controlled by: measuring the flow rate of nitrogen; and lowering the nitrogen partial pressure when the reaction proceeds too fast, by dilution of the nitrogen concentration in the furnace or evacuation of the furnace.

In DE-A-2,350,031 and GB-A-1,431,780 temperature is controlled in order to stay below the point where $\beta$-phase silicon nitride is generated, by controlling nitrogen partial pressure according to temperature detected by thermocouples mounted on the bed where silicon is placed and in the inner part of the furnace.

CA 90: 191458W (CS-A 175,124) describes control of nitrogen partial pressure to avoid sintering of silicon due to adiabatic temperature increase in the reaction of silicon and nitrogen.

The object of the present invention is to therefore improve upon the foregoing processes. Another object of the invention is to provide a process for stably producing silicon nitride rich in the $\alpha$-phase. A further object is to provide a process for nitriding silicon in an inexpensive and simplified manner.

The present invention provides a process for producing silicon nitride by heating elementary silicon under an atmosphere of nitrogen in a reaction space in a furnace characterised by the steps of:

heating the silicon in the reaction space to a temperature of 1200 - 1400°C;

charging nitrogen gas continuously into the reaction space at a constant flow rate of $(14.9\ M\ +\ V)/t$ litres/minute, where M is the amount of silicon in moles, V is the volume of the reaction space in litres, and t is the reaction time, in minutes, required for more than 98% of the silicon to react from the commencement of the reaction, thereby to maintain a nitrogen partial pressure not higher than 51 kPa (0.5 atmosphere);

commencing the reaction between the silicon and nitrogen at a nitrogen partial pressure not higher than 51 kPa (0.5 atmosphere); and

maintaining the nitrogen partial pressure not higher than 51 kPa (0.5 atmosphere) until at least 50% of the silicon has been reacted.

The invention will be described further, by way of example, with reference to the accompanying drawings, in which:

Fig. 1 shows a schematic view of a nitriding furnace;

Fig. 2 shows a pattern of reaction temperature during nitriding reaction; and

Fig. 3 shows the dependency of the reaction time upon the pressure of nitriding atmosphere within the furnace.

In order to obtain an $\alpha$ silicon nitride, metallic silicon powders must be reacted with nitrogen at a temperature up to the melting point of metallic (i.e. elementary) silicon (1414°C). Since the direct nitriding of silicon is a highly exothermic nature as the exothermal heat generation being 180kcal/mol, the increase of temperature of the reactant mass due to the exothermic nature becomes the most important consideration for the mass production of silicon nitride of high $\alpha$ content. Excessive temperature increase of the reactant mass may be avoided by increasing the heat-release. Such a measure, however, has limitations in that it requires a greater temperature distribution gradient in the metallic silicon bed and also in that bit leads to a greater loss of energy and the like. Thus for the mass production of silicon nitride, it becomes a prerequisite to control the reaction rate of metallic silicon. According to the present invention the control of the reaction rate is precisely achieved by the control of nitrogen partial pressure in addition to the control of the reaction temperature.

Thus, according to the present invention silicon nitride of high $\alpha$ content can be produced by a simplified procedure comprising placing a bed or molded product of metallic silicon in an inert atmosphere of reduced pressure not higher than 0.5 atmospheres, raising it to a temperature higher than 1200$^\circ$C at which the nitriding commences to take place, but lower than the melting point of metallic silicon (1414$^\circ$C), and thereafter passing nitrogen gas so as to maintain the nitrogen pressure in the furnace at a predetermined level or charging nitrogen at a constant flow rate to the furnace. By the above procedures an approximately constant reaction rate can be achieved due to the commensuration between the amount of nitrogen gas charged and the amount of nitrogen consumed, because when the reaction rate decreases the nitrogen partial pressure within the reaction vessel would increase, which in turn increases the reaction rate and conversely if the reaction rate increases then the nitrogen partial pressure within the reaction vessel would decrease, resulting in the reduction of the nitrogen partial pressure. During the reaction if the amount of nitrogen to be charged to the reaction vessel is controlled so that the exothermic heat generation resulting from the reaction is always less than the amount of heat to be released the reaction can be proceeded in accordance with a predetermined temperature pattern, that is, in the range of between 1200$^\circ$C and about 1400$^\circ$C without a runaway reaction temperature. Similarly the nitrogen partial pressure within the reaction vessel can be controlled such that the nitridation effected with a nitrogen partial pressure not higher than 0.5 atmospheres at the initial stage of the nitridation and thereafter raising the nitrogen partial pressure to atmospheric pressure thereby producing silicon nitride of high $\alpha$ content in a greatly reduced reaction time. It is believed that in the later stage of nitriding, the amount of unreacted metallic silicon is decreased so that a reaction rate similar to that at the initial stage can be maintained at the higher nitrogen partial pressure level.

As the metallic silicon a powder having a particle size smaller than 150 mesh is preferable. If the particle size is larger than 150 mesh the reaction becomes too slow excessively extending the reaction time which renders the process inappropriate for the commercial production of silicon nitride. As the nitrogen gas to be employed, nitrogen gas alone or a mixture of $N_2$ and at least one of $NH_3$, Ar, He and $H_2$ can be employed, with nitrogen alone being preferred. The starting material, bed or molded body (refer to hereinafter simply as bed) of metallic silicon should preferably have a density less than 1.1g/cm$^3$. If the density is greater than 1.1g/cm$^3$, the reaction rate in the center of the bed drops thereby extending the reaction time. The surface area of the bed should preferably be greater than 0.5cm$^2$/g. If the surface area is lower than 0.5cm$^2$/g the amount of reaction heat released from the bed would be reduced thereby resulting in the accumulation of heat within the bed. Such accumulation of reaction heat will reduce the proportion of $\alpha$ phase and induce the smelting of the starting material which would render the process unsuitable. Any reaction vessel or nitriding furance may be used if it can tolerate the reduced pressure at a temperature up to 1400$^\circ$C, and desirably it should be able to tolerate one positive atmospheric pressure, that is, one gauge atmospheric pressure. Furnaces such as batch kilns, shuttle kilns, tunnel kilns with separate heating zones, which have means for controlling the atmosphere may be mentioned. The furnace should desirably be maintained at a temperature of at most 1400$^\circ$C within the furnace and it is desirable to provide for means or to have a structure by which the temperature distribution within the furnace can be maintained as uniformly as possible.

The furnace also should desirably provide means for controlling temperature and the heating rate at less than 2$^\circ$C/min. Such nitriding furnaces also need a pressure gauge or a pressure sensor and a gas flow controller for charging nitriding gas or gases.

In the constant flow through system, it becomes a prerequisite to specify the reaction rate such that the total amount of reaction heat generated from the starting material charged within the furnace is not greater than the amount of heat released away from the metallic silicon bed. Thus the following relationship should be maintained:

$$\frac{180 \times \left( \frac{2M+22.4}{3} + V \right)}{2 \times 22.4 \times t} \leqq kQ \text{ , or}$$

$$\frac{180 \times \left( \frac{2M+22.4}{3} + V \right)}{2 \times 22.4 \times k \times Q} \leqq t$$

wherein:

M : amount of metallic silicon charged, (mol)

V : Volume of reaction vessel, ($\ell$),

Q : amount of heat to be released from the reaction vessel,(Kcal/min.)

t : reaction time required for more than 98% of metallic silicon has been reacted from the commencement of reaction, (min.)

k : proportion of heat released from the metallic silicon bed on the basis of total heat released.

In this system, a number of experiments have been done by changing the heat insulating conditions and the arrangement of the bed.

As a result it was found that if k is greater than 0.2, then an adequate temperature increase could not be achieved and that if k is smaller than 0.02, practical reaction time could not be adopted. From the above findings, the reaction time should be defined within the range set forth below:

$$\frac{300M + 20V}{Q} \leqq t \leqq \frac{3000M + 200V}{Q}$$

The amount of feed nitrogen ($\ell$/min.) which satisfies the above relationship is set as follows:

$$\frac{2M/3 \times 22.4 + V}{t} = \frac{14.9M + V}{t}$$

The following examples will illustrate the present invention.

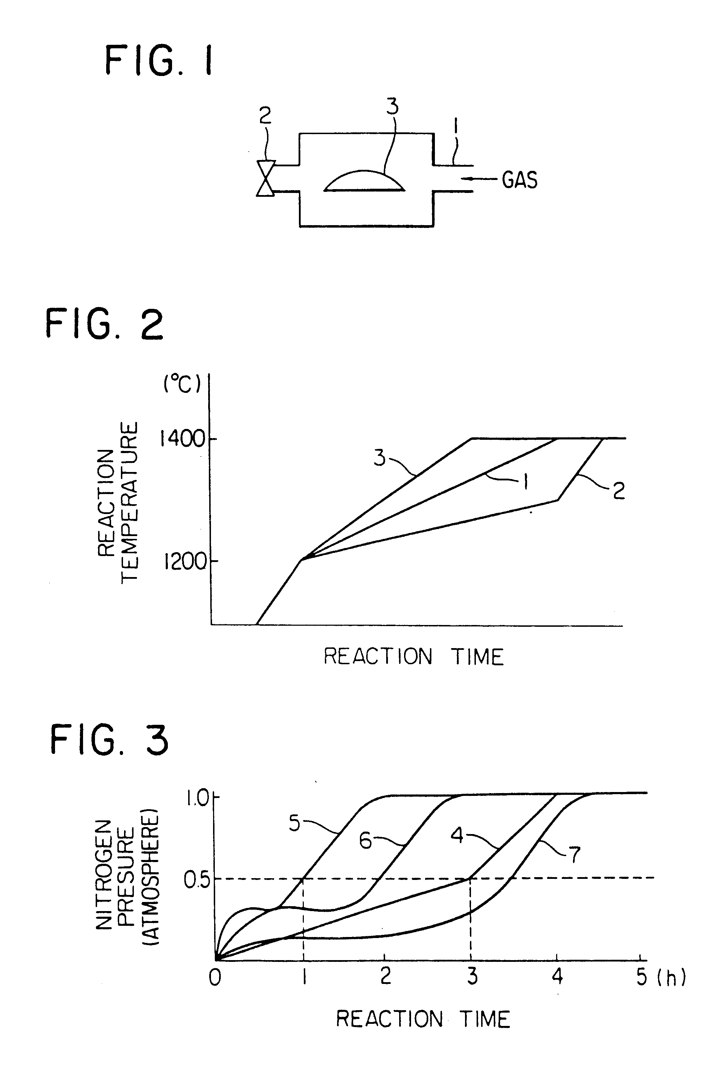

In the Examples as the nitriding furnace or reaction vessel, the furnace schematically shown in Fig. 1 was employed. In Fig. 1, reference numeral 1 indicates a nitrogen gas inlet, reference numeral 2 indicates a valve for preventing reverse flow and reference numeral 3 shows metallic silicon powders. The furnace has a capacity of 100$\ell$ and a heat releasing capacity of 200 kca./min. Metallic silicon powders (2kg) having a particle size of less than 44$\mu$ were placed in layer of 1 cm in thickness and 0.53g/cm$^3$ in density and the reaction was then carried out following the schedule of temperature pattern as shown in Fig. 2. The results are reproduced in Table 1. In Table 1, the proportion of $\alpha$ phase and the amount of unreacted Si was determined by means of x-ray diffraction analysis.

4

| Example | Atmosphere | Proportion of α phase (wt.%) | Unreacted Si (wt.%) | Temperature pattern | Reaction time (hr) |
|---|---|---|---|---|---|
| 1 | N$_2$ 0.75 atm. | 65 | 4 | 1 | 5 |
| 2 | N$_2$ 0.50 atm. | 88 | 20 | 1 | 5 |
| 3 | N$_2$ 0.25 atm. | 96 | 42 | 1 | 5 |
| 4 | N$_2$ pressure control* | 95 | 0 | 1 | 5 |
| 5 | N$_2$ 8 ℓ/min. | 70 | 0 | 1 | 5 |
| 6 | N$_2$ 6 ℓ/min. | 89 | 0 | 1 | 5 |
| 7 | N$_2$ 4 ℓ/min. | 96 | 0 | 1 | 5 |
| 8 | N$_2$ 4 ℓ/min. | 97 | 0 | 2 | 5 |
| 9 | N$_2$ 4 ℓ/min. | 94 | 0 | 3 | 5 |
| 10 | N$_2$ 5 ℓ/min. | 92 | 0 | 1 | 4 |
| 11 | N$_2$ 4 ℓ/min. | 95 | 2 | 1 | 5 |

* The pressure control followed the curve ④ in Fig. 3.

Examples 1-3

Examples 1-3 explained the process wherein the pressure in the furnace was maintained at and controlled to a constant pressure of 0.75 atmospheres, 0.50 atmospheres and 0.25 atmospheres respectively. In Example 1 (comparative Example), the nitriding reaction was almost completed but the initial reaction rate could not be effectively suppressed so that the formation of a high proportion of α phase could not be achieved. Although the apparent temperature pattern in Example 1 was similar to that in Examples 2 and 3, the real reaction rate at the micro local site was greater thereby losing the balance between the generation of exothermic heat and the heat release and thus it can be assumed that the actual temperature of the bed was higher than the apparent temperature pattern. This means that the suppression or control of the initial reaction rate is critical. The reaction rate can be reduced by reducing pressure in the reaction system, but the reaction rate in Example 3, was too slow so that the reaction couldn't be completed within 5 hours following the temperature pattern. Example 2 was similar to Example 3. Examples 2 and 3 were slow in their reaction rates, so the heat of the reaction could be appropriately supressed so that it was possible to produce silicon nitride having a high proportion of α phase even when firing with nitrogen gas alone, but the reaction time was long.

Examples 4-7

The procedures in Example 4 were combined with those in Examples 2 and 3. The pressure within the furnace was controlled as indicated in Table 1 and in Fig. 3. Controlling both the temperature and the nitrogen partial pressure enabled the double control of the reaction rate, thereby making possible the stable and sure production of silicon nitride having a high α content.
In Example 4 the reaction temperature was controlled as in Examples 2 and 3, while the nitrogen pressure was controlled as in curve ④ in Fig. 3.
Approximately 70% of the metallic silicon was nitrided when the nitrogen partial pressure reached one-half atmospheric pressure. Thereafter the nitrogen partial pressure was gradually increased and after 4 hours the pressure reached atmospheric pressure. After 5 hours metallic silicon was almost completely reacted and the content of the α phase was also 95%, the nitriding ratio being remarkably improved to almost 100%.
In Examples 6 and 7 nitrogen gas was passed through at a rate of 6ℓ/min. and 4ℓ/min. from the point where the temperatures reached 1200°C. As a result the pattern of the nitrogen partial pressure followed the curve ⑤ and ⑥ in Fig. 3. In these Examples, the nitrogen partial pressure reached 0.5 atmospheres at the early stage of the reaction as in curve ④. The patterns of nitrogen partial pressure seemed to happen the process that if the reaction turns to speed up the nitriding rate, then the reaction pressure was reduced due to the consumption of a higher amount of nitrogen, and reversely if the reaction turn to slow down, then the nitrogen partial pressure was increased due to less consumption of nitrogen, and that thus the reaction was automatically controlled at the reaction rate corresponding to the flow rate passing through the furnace. In these Examples, the nitriding ratio was approximately 100% and the content of α phase in the product was as high as 89% (Example 6) and 96% (Example 7). The nitriding ratio at which the nitrogen partial pressure reached 0.5 atmospheres was approximately 60% (Example 6) and 74% (Example 7).

5

On the other hand, in Example 5 (comparative Example) the nitrogen was passed at a rate of 8ℓ/min. and as a result the nitrogen pressure in the furnace changed as in curve ⑤ in Fig. 3 and thus the nitrogen partial pressure already reached 0.5 atmospheres at a point where the nitriding ratio was approximately 45%. Due to a rapid reaction the content of α phase in the product was reduced to 70%, although the nitriding ratio was 100%.

From the foregoing, it can be seen that if the reaction is controlled in the initial stage such that the nitrogen partial pressure in the furnace to thereby suppress the excessive generation of exothermic reaction heat by the control of the reaction rate, then a silicon nitride having a high content of α phase can be obtained. The reaction should be carried out in such a way that at last 50% of the reaction, preferably 60% of the reaction should take place until the nitrogen partial pressure reached 0.5 atmospheres.

Examples 8-10

Examples 8 and 9 were effected as in Example 7 by passing nitrogen at a rate of 4ℓ/min., except that the temperature increase in these Examples followed the curves ② and ③ in Fig. 2 respectively, in contrast to the curve ① in Fig. 2 for Example 7. The nitriding ratio of silicon was approximately 100% with an α phase content of 97% and 94%.

In Example 10, the amount of nitrogen flow was increased to 5ℓ/min., and the reaction was completed in 4 hours. The nitrogen partial pressure was zero atmospheres at the commencement and reached 0.5 atmospheres after 3 hours. The temperature pattern was approximately the same as in curve ① in Fig. 2.

Example 11

Metallic silicon powders (200g) were subjected to nitriding as in Example 7 in the form of a molded body 25cm x 15cm x 0.5cm (thickness). In this case a high content of α phase of silicon nitride was obtained.

According to the present invention silicon nitride having a high content of α phase can be produced by the use of nitrogen in a simplified procedure without the use of an expensive gas such as hydrogen, argon or helium. The process according to the present invention permits the nitrogen gas consumption near the therotical amount of nitrogen for the production of silicon nitride which is very favourable from the standpoint of production cost and safety. It can also be carried out in simplified facilities. For mass production the facilities and the procedures are uncomplicated thereby permitting the stable and inexpensive production of silicon nitride of high α content.

**Claims**

1. A process for producing silicon nitride by heating elementary silicon under an atmosphere of nitrogen in a reaction space in a furnace characterised by the steps of:

    heating the silicon in the reaction space to a temperature of 1200 - 1400°C;

    charging nitrogen gas continuously into the reaction space at a constant flow rate of (14.9 M + V)/t litres/minute, where M is the amount of silicon in moles, V is the volume of the reaction space in litres, and t is the reaction time, in minutes, required for more than 98% of the silicon to react from the commencement of the reaction, thereby to maintain a nitrogen partial pressure not higher than 51 kPa (0.5 atmosphere);

    commencing the reaction between the silicon and nitrogen at a nitrogen partial pressure not higher than 51 kPa (0.5 atmosphere); and

    maintaining the nitrogen partial pressure not higher than 51 kPa (0.5 atmosphere) until at least 50% of the silicon has been reacted.

2. A process according to claim 1, wherein the nitrogen partial pressure is gradually raised after at least 50% of the silicon is reacted.

3. A process according to any of claim 1 or 2, wherein the α-phase content of the silicon nitride produced is at least 89%.

**Revendications**

1. Procédé de fabrication d'un nitrure de silicium par chauffage de silicium élémentaire sous une atmosphère d'azote dans un espace réactionnel dans un four, caractérisé par les étapes de :

chauffer le silicium dans l'espace réactionnel à une température de 1200-1400˚C ;

introduire de l'azote gazeux continuellement dans l'espace réactionnel à un débit constant de (14,9 M + V)/t litres/minute où M est la quantité du silicium en moles, V est le volume de l'espace réactionnel en litres et t est le temps de la réaction en minutes, qu'il faut pour que plus de 98% du silicium réagisse à partir du début de la réaction, pour ainsi maintenir une pression partielle d'azote ne dépassant pas 51 kPa (0,5 atmosphère) ;

commencer la réaction entre le silicium et l'azote à une pression partielle d'azote ne dépassant pas 51 kPa (0,5 atmosphère) ; et

maintenir la pression partielle d'azote à pas plus de 51 kPa (0,5 atmosphère) jusqu'à ce qu'au moins 50% du silicium ait réagi.

2. Procédé selon la revendication 1, où la pression partielle d'azote est graduellement élevée après avoir fait réagir au moins 50% du silicium.

3. Procédé selon l'une quelconque des revendications 1 ou 2, où la teneur en phase $\alpha$ dans le nitrure de silicium produit est d'au moins 89%.

**Patentansprüche**

1. Verfahren zur Herstellung von Siliziumnitrid durch Erhitzen von elementarem Silizium unter Stickstoffatmosphäre in einem Reaktionsraum in einem Ofen, **gekennzeichnet** durch folgende Schritte:

Erhitzen des Siliziums in dem Reaktionsraum auf eine Temperatur von 1200 bis 1400˚C;

kontinuierliches Zuführen von Stickstoffgas in den Reaktionsraum bei einer konstanten Flussrate von (14,9 M + V)/t Liter/Minute, worin M die Menge an Silizium in Mol ist, worin V das Volumen des Reaktionsraumes in Litern ist und worin t die Reaktionszeit in Minuten darstellt, die erforderlich ist, damit mehr als 98 % des Siliziums von dem Beginn der Reaktion an reagieren, um dadurch einen Stickstoff-Partialdruck von nicht mehr als 51 kPa (0,5 Atm) aufrechtzuerhalten;

Beginn der Reaktion zwischen dem Silizium und dem Stickstoff bei einem Partialdruck von Stickstoff von nicht mehr als 51 kPa (0,5 Atm); und

Aufrechterhalten des Partialdrucks von Stickstoff bei nicht mehr als 51 kPa (0,5 Atm), bis zumindest 50 % des Siliziums reagiert haben.

2. Verfahren nach Anspruch 1, dadurch **gekennzeichnet,** dass der Partialdruck von Stickstoff graduell erhöht wird, nachdem zumindest 50 % des Siliziums reagiert haben.

3. Verfahren nach Anspruch 1 oder 2, dadurch **gekennzeichnet,** dass der Gehalt der alpha-Phase des erzeugten Siliziumnitrids zumindest 89 % ausmacht.

# FIG. 1

# FIG. 2

# FIG. 3